# EUROPEAN PATENT APPLICATION

(11) **EP 2 360 903 A1**
(43) Date of publication of application: **24.08.2011**
(21) Application number: 09829961.3
(22) Date of filing: 12.08.2009
(51) Int. Cl.: H04M 3/02

(54) **TELEPHONE ACCESS DEVICE AND CHANNEL DRIVING METHOD**

(30) Priority: 04.12.2008 CN 200810218060
(71) Applicant: ZTE Corporation, Shenzhen, Guangdong 518057 (CN)
(72) Inventor: YANG, Guangxiang, Guangdong 518057 (CN); ZHAO, Huiwei, Guangdong 518057 (CN)
(74) Representative: Rapisardi, Mariacristina
(86) International application number: PCT/CN2009/073223
(87) International publication number: WO 2010/063177

(57) **Abstract**

A telephone access device and a channel-driven allocation method thereof are provided. The telephone access device includes a programmable computer system and a SLIC module configured to drive multiple connected telephone set to ring by sending and stopping ring current to related channels, and includes a channel allocation program module, a processor CPU is configured to control the SLIC module to complete one time channel allocation according two an instruction of the channel allocation program module in each time unit; and when the number of channels in a ring current time period of a ringing period is smaller than a ringing capacity threshold of the SLIC module or a time unit in which the total number of the channels in the ring current time period is smaller than the ringing capacity threshold of the SLIC module is found out within a time period which is smaller than a ringing cycle, a new ringing request is accepted, otherwise the new ringing request; is rejected, The invention performs peak shining allocation on the channels according to the ringing waveform characteristics, and expands the driving ability,

## Description

### Field of the Invention

The present invention relates to a telephone access device and a channel-driven method thereof.

### Background of the Invention

A subscriber line interface circuit (SLIC) is a hardware module used in a telephone access device. It is used for driving a telephone set connected to the telephone access device. Its most important function is to send ring current for driving a telephone set to ring.

The ringing represents that a telephone set gives a rhythmic sound to notify the user that there is an incoming call currently. The ringing sound of telephone set is composed of multiple ringing cycles. Each ringing cycle is composed of sound phase and silence phase.

Each telephone set connects to a telephone access device via a telephone line. Each telephone line corresponds to one channel of a SLIC module. The ringing of telephone set is generated by the SLIC module sending a high-level ring current to the telephone set by use of the channel connected with the telephone set. When the channel of the SLIC module sends a continuous ring current, the telephone set also sends a continuous ringing sound, i.e. it is in the sound phase. When the SLIC module orders a corresponding channel stopping to send a ring current, the telephone set connected with the SLIC module is in the silence phase; at this point, the telephone set gives no sound. The SLIC module control the keep time and stop time of ring current via the channel, so that the telephone set generates a regular and periodical ringing sound. The lengths of keep time and stop time of the ring current cause the ringing sound of different modes. Such different ringing modes are referred to a tone.

However, there is a problem in the detailed application of the SLIC.

The capability for the SLIC mode sending a ring current is limited since the power supply capability of telephone access device is limited. The channel amount simultaneous sending ring currents is limited (the limited amount is referred to as ringing capability threshold) though the SLIC module has multiple channel capable of connecting a corresponding number of telephone sets. That is to say, suppose the telephone access device connects overfull telephone sets, the SLIC module only drives a limited number of telephone sets ringing (be in the sound phase) at the same time. In practical applications, the case is not rare that the telephone set amount connected by the telephone access device exceeds the threshold of the SLIC module.

Improving the power supply capability of telephone access device and increasing the amount of the SLIC module can correspondingly extend the driving capability of the whose telephone access device; however, such improved method is not the best method since the cost is increased.

### Summary of the Invention

The present invention is provided to the problem that the SLIC module only drives the limited telephone sets ringing simultaneously in the related art; the objective of the present invention is to disclose a telephone access device and channel-driven method thereof, the concurrent driving is performed by use of the method of shifting ringing peak, so that the SLIC module controls channels as much as possible, and drives telephone sets ringing simultaneously as many as possible.

To achieve the above objectives, according to an aspect of the present invention, a telephone access device is provided.

The telephone access device comprises a programmable computer system and a subscriber line interface circuit (SLIC) module configured to drive multiple connected multiple telephone sets to ring respectively by sending and stopping ring current to related channels; the programmable computer system further comprises a memory RAM, a memory ROM and a processor CPU; the memory ROM further comprises a channel allocation program module; the processor CPU configured to control the SLIC module to complete one time channel allocation according to an instruction of the channel allocation program module in each time unit;

When a new ringing request is received, the channel allocation program module configured to judge whether a time unit exists in which a number of the channels in a ring current time period is smaller than a ringing capacity threshold of the SLIC module within a time period which is smaller than a ringing cycle; if the time unit exists, to accept a new ringing request, and to set the time unit within the ring current time slice.

Preferably, the memory RAM further comprises multiple channel-driven data areas respectively corresponding to various channel the channel-driven data areas is configuration to record whether the channel is in the tinging cycle and a phase in the ringing cycle; the channel allocation program module further configured to update each channel data area in each time unit, and to control the SLIC module to drive the channel to send or to stop ring current in the next time unit according to a record of the data area record corresponding to the channel and a ringing waveform; when the new ringing request is accepted, the channel-driven data areas mark that the corresponding channel is in the ringing cycle.

Preferably, multiple channel-driven data areas respectively corresponding to various channels are timer of which the initial value is 0; when a channel is in the ringing cycle, the value of the timer corresponding to the channel in each time unit is one-time accumulated; when the value of timer is accumulated up to a ringing cycle, it is reset to zero.

Preferably, the time unit is 10 milliseconds.

To achieve the above objectives, according to another aspect of the present invention, a channel-driven method of telephone access device is provided.

The telephone access device comprises a programmable computer system which having a channel allocation program and a subscriber line interface circuit (SLIC) module which is configured to drive a connected telephone set to ring by sending and stopping ring current to related channels; the method comprises: the channel allocation program controlling the SLIC module to complete one time channel allocation in each time unit; when a new ringing request is received, the channel allocation program successively determining whether a number of the channels in a ring current time period in each time unit is smaller than a ringing capacity threshold of the SLIC module within a time period which is smaller than a ringing cycle; if the number of the channels in the ring current time period in each time unit is smaller than the ringing capacity threshold of the SLIC module within a time period which is smaller than a ringing cycle, accepting a new ringing request, and setting the time unit within the ring current time period; or else rejecting the new ringing request.

Preferably, establishing multiple channel-driven data areas respectively corresponding to various channels, which is configured to record whether the channel is in the ringing cycle and a phase in the ringing cycle, comprising the following steps: step 1, checking whether there is a new ringing request; step 2, updating the channel-driven data area of each channel, and controlling the SLlC module to drive the channel to send or to stop ring current in the next time unit for channels in the ringing cycle according to the record of the data area corresponding to the channel and a ringing waveform; step 3, when the number of the channel in the ring current time period within the ringing cycle is smaller than the ringing capability threshold of SLIC module, accepting the new ringing request, driving the corresponding channel to send ring current and updating the corresponding channel-driven data area.

Preferably, the channel-driven data area is a timer of which the initial value is 0; when a channel is in the ringing cycle, the value of the timer corresponding to the channel in each time unit is one-time accumulated; when the value of timer is accumulated up to a ringing cycle, it is reset to zero.

Preferably, in step (2), the initial value of channel-driven data area is set as 1 or negative number.

Preferably, the time unit is 10 milliseconds.

The invention performs peak shifting allocation on the channels according to the waveform characteristics of the ringing cycle, performs the ringing by use of the interval between the ring current stops, avoids the peak, and improves the drive capability of the SLIC module, so that the SLIC module can drive as much as possible telephone sets ringing simultaneously.

### Brief Description of the Accompanying Drawings

The drawings herein are used to provide further understanding of the present invention and form a part of the specification, which are used to explain the present invention with embodiments of the present invention rather than unduly limit the present invention. In the accompanying drawings:
Fig.1 is a structure diagram illustrating the telephone access device according to an embodiment of the present invention;
Fig.2 is a waveform diagram illustrating the ringing tone according to an embodiment of the present invention;
Fig.3 is a schematic diagram illustrating the method of shifting the ringing peak according to an embodiment of the present invention; and
Fig.4 is a flowchart illustrating the channel-driven method of telephone access device according to an embodiment of the present invention.

### Detailed Description of the Embodiments

The present invention is hereinafter described in detail with reference to the accompanying drawings and embodiments.

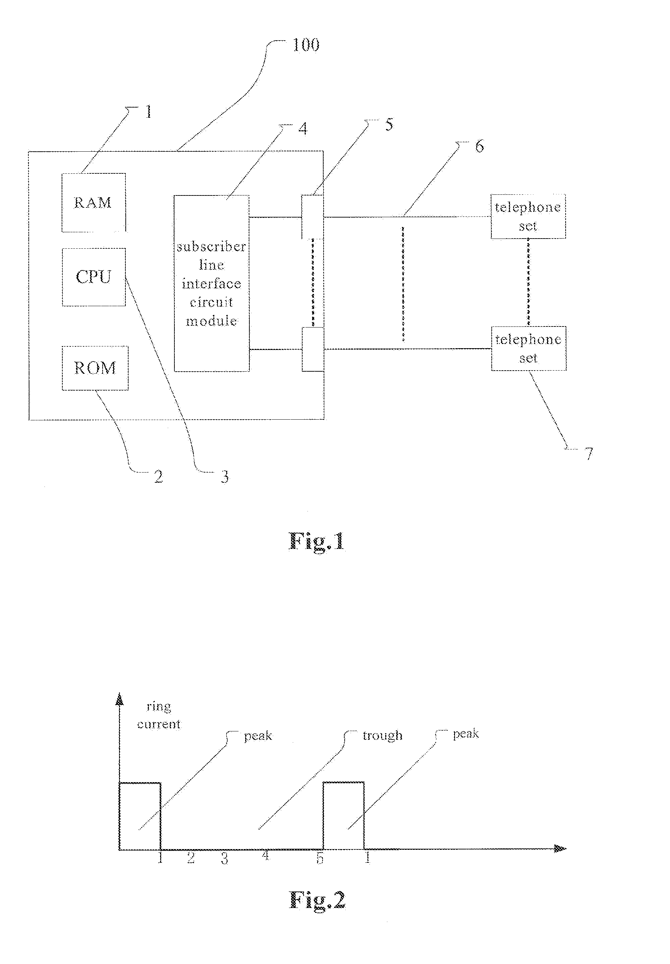

Fig.1 is a structure diagram illustrating the telephone access device according to an embodiment of the present invention. As shown in Fig.1, a typical telephone access device comprises:

RAM1, ROM2, processor 3, SLIC module 4, connecting port 5 (the port is not limited to the total number as shown in Fig.1). Processor 3, RAM1 and ROM2 form a programmable computer system. The channel allocation algorithm is implemented by program and stored in ROM2. Processor 3 reads this program from ROM2 and performs it to drive the SLIC module 4 completing the detailed channel allocation; the SLIC module 4 is responsible for controlling the channel sending and stopping ring current; the connecting port 5 corresponds to the internal channel of the SLIC module 4 and is used for connecting a telephone set. Connecting line 6 establishes the physical connection between the telephone set 7 and the connecting port 5. The connecting line 6 carries ring current.

Fig.2 is a waveform diagram illustrating the ringing tone according to an embodiment of the present invention. As shown in Fig.2, the waveform diagram illustrating the ringing tone of telephone set. The waveform diagrams of ringing tone of various countries are different. The cycle of waveform diagram as shown in Fig.2 is 5 seconds. The former one second is ring current time period and the later four seconds are silence time period. The waveform can also be referred to as the former one second is peak and the later four seconds are trough.

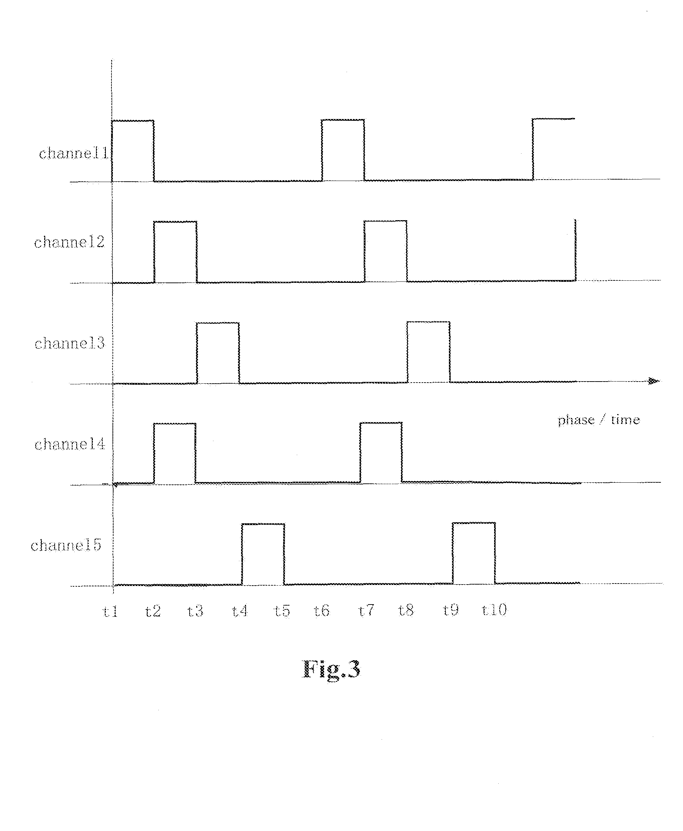

Fig.3 is a schematic diagram illustrating the method shifting the ringing peak according to an embodiment of the present invention. As shown in Fig.3, the method shifting the peak is used when five channels are in the ringing state simultaneously.

Only channel 1 is at the peak at t1 moment.

Channels 2 and 4 are at the peak at t2 moment.

Only channel 3 is at the peak at t3 moment.

Only channel 5 is at the peak at t4 moment.

It can be Seen that, though five channels are in the ringing cycle currently, at the same time, only two channels are at the peak at most, i.e. in the ring current time period, reducing the total number of ring current greatly.

To start the drive channel allocation method, the processor 3 starts the allocation program stored in ROM2. The allocation program implements the drive channel allocation method by use of program codes according to the scheme of the present invention. After a ringing request is provided to the allocation program, the program judges to perform ringing immediately, postpone ringing, or reject ringing according to the determining process of the present invention.

The following embodiments are given as example hereinafter.
1. the computer program is used for implementing the allocation method. The program is stored in ROM2.
2. the data is stored in ROM2 for representing the waveform of ringing period.
3. by taking Fig. 2 for example, a typical mathematical representation of waveform is {[0,1],5}. The representation representing 0 second to 1 second is ringing time period and the cycle is 5 seconds. The representation representing no explicit expression is silence time period. [1,5] is silence time period. In this way, the waveform diagram of Fig.2 can only be represented by a two-tuples. If there are multiple ringing time periods, which can be represented by a multi-tuples.
4. the number of connecting port of telephone access device is stored in ROM2, of which each port is referred to as one channel logically.
5. after power-up starting a telephone access device, the processor 3 reads program from ROM2, and loads it in RAM1 for performing. The waveform data and connecting port number can be set in RAM1 by processor 3. Such data can be accessed by the processor 3.
6. the processor 3 establishes a timer for each channel by executing program. When a channel is in a ringing cycle, the timer is set as 0. The processor 3 accumulates the timer one time passing each time unit. The value of timer is reset to zero when it is accumulated to a ringing cycle. The value of the timer is stored in RAM1. The timer represents the phase of channels which are in ringing cycle.

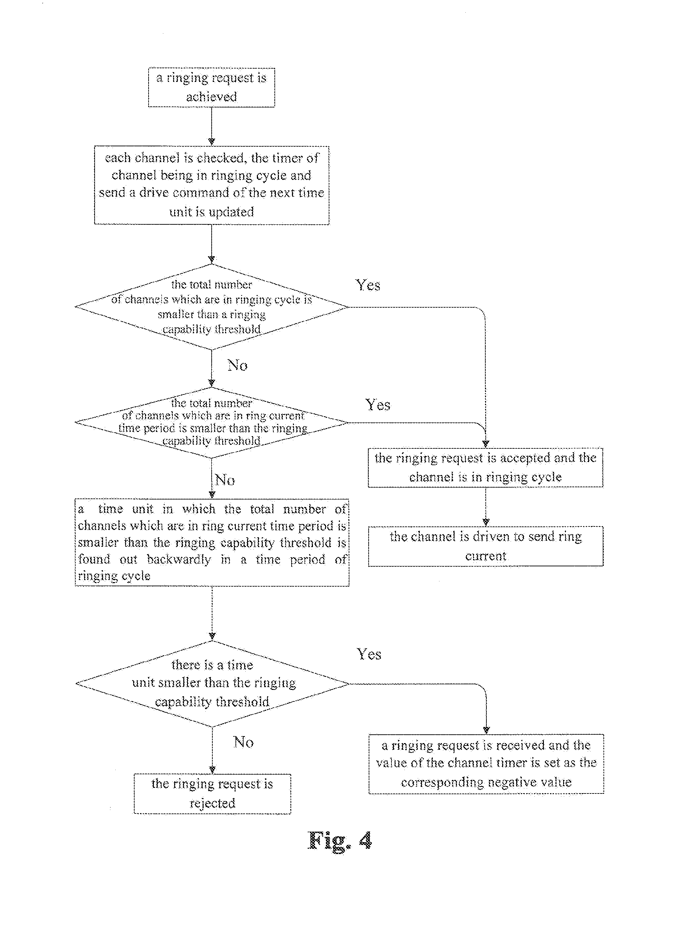

7. Fig.4 is a flowchart illustrating the channel-driven method of telephone access device according to an embodiment of the present invention. As shown in Fig.4, by use of the timer of a programmable computer system, the processor 3 is set to acquire an opportunity for executing the channel allocation program every 10 which is referred to as one time unit.
8. for each execution, the program first checks whether a ringing request is achieved. Afterwards, each channel is checked. For channels which are in ringing cycle, the program performs the accumulation operation for the timer of the channel or the timer is reset as 0 (when the value of timer is equal to ringing cycle). According to the waveform, the program determines whether the channel is in ringing time period or silence time period in the next time unit. That is to say, whether it is in interval [0,1] or [1,5]. If it is the former, the program sends a command causing the SLIC module to drive a channel sending ring current; otherwise, the program sends a command causing the SLIC module to control a channel stopping ring current.
9. if the processor 3 receives a ringing request, the executed channel allocation program can acquire the arrival of ringing request and the channel corresponding to the ringing request. The channel allocation program can check the number of channels which are in ringing cycle. If it is smaller than the ringing capability threshold of the SLIC module 4, the ringing request is accepted and the corresponding channel is driven to send ring current. At the same time, the corresponding channel is marked to be in ringing cycle.
10. if the processor 3 receives a ringing request, the executed channel allocation program may acquire the arrival of ringing request and the channel corresponding to the ringing request. The channel allocation program can check the total number of channels which are in ringing cycle. If it is greater than the ringing capability threshold of SLIC module 4, the processor 3 makes an ergodicity of various channels to calculate the total number of channel in ringing time period.
11. if the total number of channels which are in ring current time period is smaller than the ringing capability threshold of SLIC module 4 at this point, the channel allocation program accepts this ringing request, and instructs the SLIC module 4 to drive the corresponding channel sending ring current. At the same time, the corresponding channel is marked to be in ringing cycle.
12. if the total number of channels which are in ring current time period is greater than the ringing capability threshold of SLIC module 4 at this point, the channel allocation program accumulates the total number of channels which are in ring current time period in the next time unit Backwards, it is attempted to find out a moment that the total number of channels which are in ring current time period is smaller than the ringing capability threshold of SLIC module 4. The backward found time interval is smaller than ringing cycle. By taking Fig. 2 for example, the ringing cycle is 5 seconds.
13. if the time unit is found, the channel allocation program accepts a ringing request; however, it does not instruct SLIC module 4 to drive the corresponding channel immediately. The start time of channel is postponed to the moment meeting the requirements found in step 13. The objective is achieved by setting the timer of line as negative value.
14. if the time point meeting the requirements is not found, the channel allocation program rejects the ringing request.

The ringing time length of each channel is limited. The time for stopping ringing is overtime and off-hook. The overtime represents that the ringing time length reaches the sum of several ringing cycle. The off-hook represents that the user answers a call. The channel allocation program marks that the corresponding channel is in idle state when the overtime and the off-hook take place.

The main idea of the present, invention is to drive other telephone sets sending ringing successively by use of the silence phase of stopping: ring current. The sound phases of different telephone sets are shifted to reduce the total number of ring current at the same time. If the sound phase is referred to as peak and the silence phase is referred to as trough, the essence of the method is to shift the peaks mutually. The user does not detect a generated small change since the ringing tone has no obvious visible change. The shifting of sound phase means that the silence phase of telephone set is utilized. In this way, the SLIC module can drive more telephone sets ringing simultaneously. It is exacted that, more telephone sets can be in ringing cycle at the same time, though their sound phases are shifted.

As described above, the ringing of telephone set has tone. It is represented that, one ringing cycle is formed of one or more sound phase of variable length and one or more silence phase of variable length. For the view of the SLIC module, the sound phase and the silence phase respectively corresponds to ring current time period and non-ring current time period. At the same time, the SLIC module only sends a limited number of ring current. By use of non-ring current time slice, the SLIC module can send ring current to other telephone sets which are in ringing cycle. By the cross combination, the SLIC module can simultaneously drive telephone sets of which the total number exceeds its capability upper limit number (ringing capability threshold), so that more telephone sets can be in ringing cycle at the same time. Though their sound phases are shifted, it does not affect the subjective feelings of the users.

Since the SLIC module controls ring current via channel, the method is implemented by the allocation of the channels.

The drive channel allocation method provided in the present invention, comprises following steps:
1. a telephone access device accesses a telephone set. For a SLIC module, an accessed telephone set is referred to as a line, which corresponds to a channel of the SLIC module. Channel and line in the present invention are referred to as the same concept,
2. the telephone access device at least comprises a processor module, a random memory module and a SLIC module.
3. according to ringing tone, a ringing cycle is divided into ring current time period and non-ring current time period. To simplify the description, the ring current time period is referred to as ring current time period and the non-ring current time period is referred to as silence time period. A ringing cycle includes one or more ring current time periods and one or more silence time periods. The ring current time period corresponds to the sound phase. The silence time period corresponds to the silence phase.
4. a data area is maintained for each channel. The data area records whether the channel is in ringing cycle currently; if the channel is in ringing cycle, the data area records the phase of channels which are in ringing cycle in real time. It is determined whether the channel is in ring current state or silence state by means of phase. The record of each data area can be saved in the random memory module and accessed by a processor.
5. 10 ms is set as a time unit. In each time unit, the processor cheeks the data area of each channel of the SLIC module. If the channel is in ringing cycle, the phase data of data area of channel are updated. Afterwards, it is determined whether the channel is in ring current state or silence state in the next time unit. If the channel is in ring current state in the next time unit, the processor instructs the SLIC module to drive the channel sending ring current. If the channel is in silence state in the next time unit, the processor instructs the SLIC module to drive the channel stopping ring current.
6. the ringing request is triggered by the external environment. The typical case is that there is an external network incoming call. Ringing requests can be uniformly provided to the processor for further processing.
7. after receiving a ringing request, the processor makes an ergodicity of the data area of each channel, calculates the total number of channel being in ring current time slice currently. If the total number is smaller than the ringing capability threshold of SLIC module the processor accepts the ringing request, sends a command to the SLIC module to drive the corresponding channel starting ringing.
8. after receiving a ringing request, the processor makes an ergodicity of the data area of each channel, calculates the total number of channel being in ring current time slice currently. If the total number is greater than the ringing capability threshold of SLIC module, proceed to step 9.
9. the processor makes an ergodicity of the data area of each channels, calculates the total number of channel being in ring current time slice within the next time unit, If the total number is still greater than the ringing capability threshold of SLIC module, the search is continued backwards.
10. if a time unit meeting the conditions is found, the processor accepts the ringing request, and does not drive the corresponding channel starting ringing immediately. The start time of driving the channel is set as the found time point.
11. if the time point meeting the requirements is not found, the processor rejects the ringing request.
12. The ringing time length of each channel is limited. The time for stopping ringing is overtime and off-hook. The overtime represents that the ringing time length reaches the sum of several ringing cycle. The off-hook represents that the user answers a call. The processor instructs the SLIC module stopping the ringing operation of the corresponding channel, and records that the channel is not in ringing cycle at the data area of the corresponding channel when the overtime and the off-hook take place.

It should be understood by those skilled in the art that each module and, step in the present invention may be carried out by universal computing devices either by being integrated in a single computing device or distributed in a network composed of a plurality of computing devices. Alternatively, the modules and steps may be stored in a storing device for implementation by the computing device or respectively produced into individual integrate circuit modules, additionally, a plurality of them may also be integrated into a single integrate circuit module. Thus, they can thereby be carried out by program codes performable for the computing device. Therefore, the present invention is not restricted to any specific combination of hardware, and software.

The present invention has been shown with reference to the above-described embodiments, and it is not to be limited by the abo-embodiments. It is understood by those skilled in the art various alterations and changes may be made within the spirit and scope of the invention. All modifications, substitute equivalents or improvements made therein are intended to be embraced in the claims: of this invention.

## Claims

1. A telephone access device, comprising: a programmable computer system and a Subscriber Line Interface Circuit (SLIC) module configured to drive multiple connected telephone sets to ring respectively by sending and stopping ring current to related channels; the programmable computer system further comprises a memory RAM, a memory ROM and a processor CPU, the memory ROAM further comprises a channel allocation program module; the processor CPU configured to control the SLIC module to complete one time channel allocation according to an instruction of the channel allocation program module in each time unit;
when a new ringing request is received, the channel allocation program module configured to judge whether a time unit exists in which a number of the channels in a ring current time period is smaller than a ringing capacity threshold of the SLIC module within a time period which is smaller than a ringing cycle; if the time unit exists, to accept a new ringing request, and to set the time unit within the ring current time period.

2. The telephone access device according to claim 1, **characterized in that** the memory RAM further comprises multiple channel-driven data areas respectively corresponding to each channel; the channel-driven data areas configured to record whether the channel is in the ringing cycle, and a phase in the ringing cycle;
the channel allocation program module further configured to update each channel data area in each time unit, and to control the SLIC module to drive the channel to send or to stop ring current in the next time unit according to a record of the data area corresponding to the channel and a ringing waveform;
when the new ringing request is accepted, the channel-driven; data areas configured to mark the corresponding channel is in the ringing cycle.

3. The telephone access device according to claim 1, **characterized in that** the multiple channel-driven data areas respectively corresponding to each channel are timers of which the initial value is 0; when a channel is in the ringing cycle the value of the timer corresponding to the channel in each time unit is one time accumulated; when the value of timer is accumulated up to a ringing cycle, it is reset to zero.

4. The telephone access device according to claim 2, **characterized in that** the time unit is 10 milliseconds.

5. A channel-driven method of telephone access device, the telephone access device comprises a programmable computer system which having a channel allocation program, and Subscriber Line Interface Circuit (SLIC) module which is configured to drive a connected telephone set to ring by sending and stopping ring current to related channels, **characterized in that**,
(1) the channel allocation program controlling the SLIC module to complete one time channel allocation in each time unit;
(2) when a new ringing request is received, the channel allocation program successively determining whether a number of the channels in a ring current time period in each time unit is smaller than a ringing capacity threshold of the SLIC module within a time period which is smaller than a ringing cycle; if the number of the channels in the ring current time period in each time unit is smaller than the ringing capacity threshold of the SLIC module within a time period which is smaller than a ringing cycle, accepting the new ringing request, and setting the time unit within the ring current time period; or else rejecting the new ringing request.

6. The channel-driven method of telephone access device according to claim 5, **characterized by**,
establishing multiple channel-driven data areas respectively corresponding to various channels, which is configured to record whether the channel is in the ringing cycle and a phase in the ringing cycle;
the step (1) comprises the following steeps :
first step, checking whether there is a new ringing request;
second step, updating the channel-driven data area of each channel, and controlling the SLIC module to drive the channel to send or to stop ring current in the next time unit for channels in the ringing cycle according to the record of the data area corresponding to the channel and a ringing waveform;
third step, when the number of the channel in the ring current time period within the ringing cycle is smaller than the ringing capability threshold of SLIC module, accepting the new ringing request, driving the corresponding channel to send ring current and updating the corresponding channel-driven data area.

7. The channel-driven method of telephone access device according to claim 6, **characterized in that** the channel-driven data area is a timer of which the initial value is 0; when a channel is in the ringing cycle, the value of the timer corresponding to the channel in each time unit is one time accumulated; when the value of timer is accumulated up to a ringing cycle, it is reset to zero.

8. The channel-driven method of telephone access device according to claim 7, **characterized in that** instep (2), the initial value of channel-driven data area is set as 1 or negative number.

9. The channel-driven method of telephone access device according to claim 5. **characterised in that** the time unit is 10 milliseconds.
